(19) Europäisches Patentamt
European Patent Office
Office européen des brevets

(11) Veröffentlichungsnummer: **0 110 822 B1**

# (12) EUROPÄISCHE PATENTSCHRIFT

(45) Veröffentlichungstag der Patentschrift: **01.04.87**

(51) Int. Cl.⁴: **D 06 P 3/30,** D 06 P 3/32, C 09 B 45/16

(21) Anmeldenummer: **83810495.8**

(22) Anmeldetag: **27.10.83**

(54) **Verwendung von 1:2-Chromkomplexfarbstoffen zum Färben von Leder oder Pelzen.**

(30) Priorität: **02.11.82 CH 6366/82**

(43) Veröffentlichungstag der Anmeldung: **13.06.84 Patentblatt 84/24**

(45) Bekanntmachung des Hinweises auf die Patenterteilung: **01.04.87 Patentblatt 87/14**

(84) Benannte Vertragsstaaten: **CH DE FR GB IT LI**

(56) Entgegenhaltungen:
**EP - A - 0 061 998**
**EP - A - 0 061 999**
**EP - A - 0 092 923**
**FR - A - 1 220 724**
**FR - A - 2 340 355**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Püntener, Alois, Dr., Pulverweg 13, CH-4310 Rheinfelden (CH)**
Erfinder: **Koller, Josef, Römerstrasse 22, CH-4153 Reinach (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Verwendung von 1:2-Metallkomplexfarbstoffen der Formel

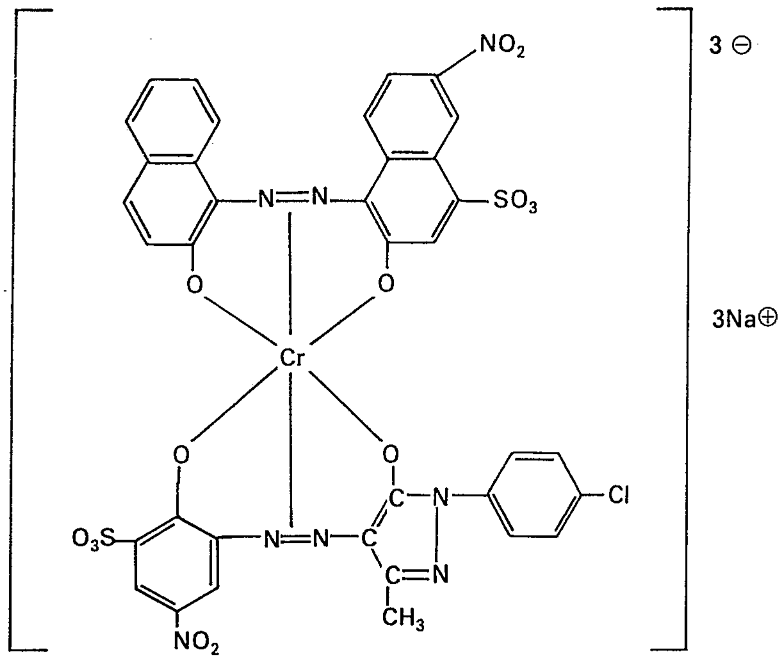

und der Formel

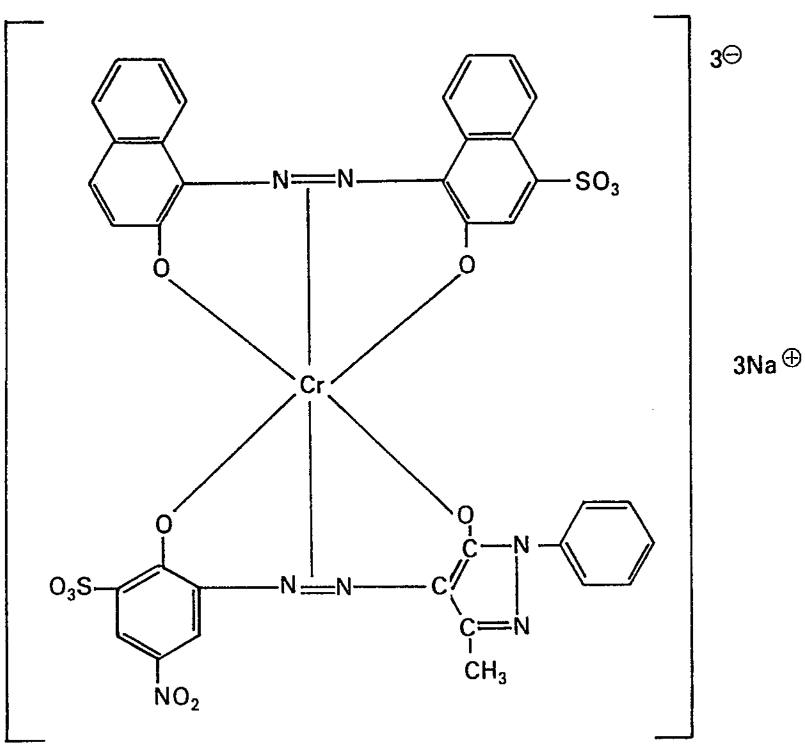

zum Färben von Leder ist bereits z.B. aus der FR-A 1 220 724 bekannt.

Die Verwendung von 1:2-Chromkomplexfarbstoffen der Formel

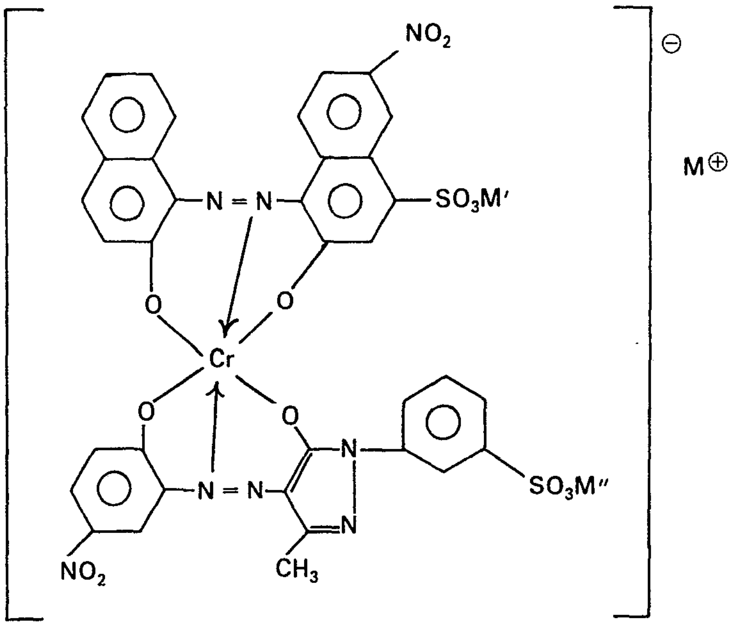

zum Färben von Leder und Wolle ist in der EP-A 0 092 923 (Prioritätstag: 23.04.82; Anmeldetag: 06.04.83; Veröffentlichungstag: 02.11.83) vorgeschlagen worden.

Die Erfindung betrifft die Verwendung von spezifischen 1:2-Chromkomplexfarbstoffen der Formel I

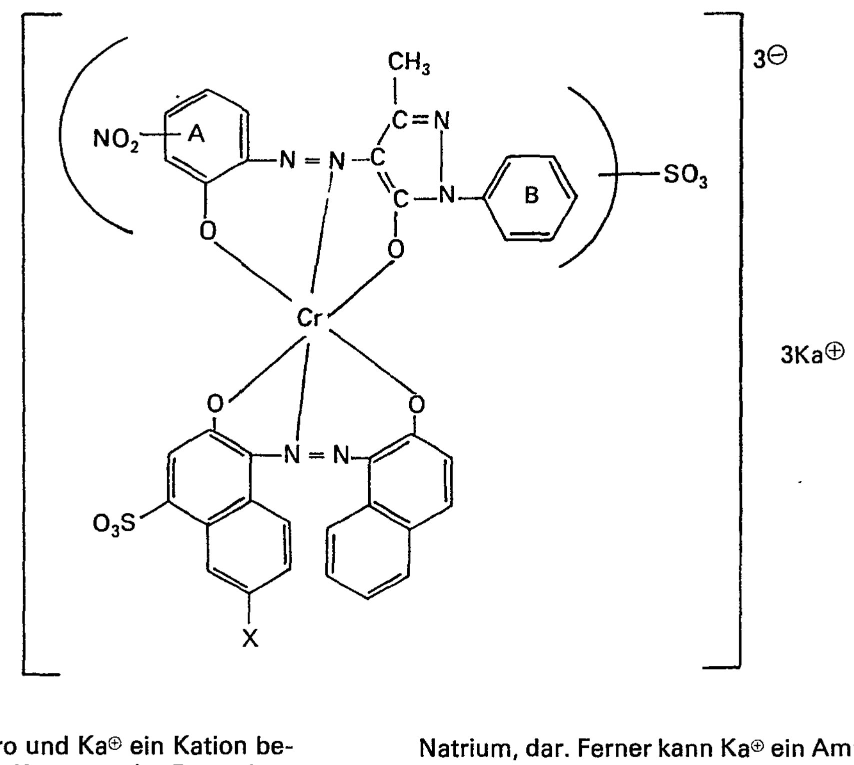

(I),

worin X Chlor oder Nitro und $Ka^{\oplus}$ ein Kation bedeutet und worin die Sulfogruppe im Pyrazolonfarbstoff im Ring A oder B und die Nitrogruppe im Ring A dieses Farbstoffs in 4-, 5- oder 6-Stellung des 1-Hydroxy-2-aminobenzols angeordnet ist, mit der Massgabe, dass sich die Nitrogruppe nicht in 4-Stellung im Ring A befindet, wenn die Sulfogruppe metaständig zum Pyrazolonrest im Ring B angeordnet ist, zum Färben von Leder oder Pelzen.

$Ka^{\oplus}$ stellt ein Kation, beispielsweise ein Alkalikation, wie Lithium, Kalium oder vorzugsweise Natrium, dar. Ferner kann $Ka^{\oplus}$ ein Ammoniumkation oder das Ammoniumsalz eines organischen Amins sein.

Die Nitrogruppe im Ring A ist vorzugsweise in 4- oder 6-Stellung, insbesondere in 4-Stellung angeordnet.

Die Sulfogruppe im Pyrazolonfarbstoff befindet sich im Ring B in 2-, 3- oder 4-Stellung, vorzugsweise jedoch im Ring A und insbesondere in diesem Ring in 6-Stellung.

X bedeutet vorzugsweise Nitro.

Von den Farbstoffen der Formel I ist derjenige

besonders bevorzugt, bei dem X Nitro bedeutet und die Nitrogruppe im Ring A in 4-Stellung sowie die Sulfogruppe in diesem Ring in 6-Stellung angeordnet ist.

Die Farbstoffe der Formel I werden in üblicher Weise über den 1:1-Chromkomplex eines der Azofarbstoffe hergestellt.

Die 1:2-Chromkomplexe werden zum Färben von Pelzen oder vorzugsweise von Leder verwendet, wobei alle Ledersorten geeignet sind, z.B. Chromleder, nachgegerbtes Leder oder Velourleder von Ziege, Rind oder Schwein. Sie zeichnen sich vor allem durch eine hohe Farbstärke auf Leder aus.

Man erhält gedeckte braune Färbungen mit sehr guten Echtheiten, insbesondere Licht- und Nassechtheiten.

Die bevorzugte Verwendung der Farbstoffe liegt im Färben von Leder mit Farbstoffmischungen in dunklen Tönen, insbesondere im Gemisch mit einem oder mehreren geeigneten gelben, blauen oder roten 1:2 Metallkomplexfarbstoffen, womit auf Leder praktisch alle dunkleren Nuancen mit verhältnismässig wenig Farbstoff erzielt werden können. Diese Mischungen ermöglichen Ton-in-Ton-Färbungen auf verschiedenen Ledersorten.

Vorzugsweise verwendet man Farbstoffmischungen, enthaltend

a) einen braunen 1:2-Chromkomplexfarbstoff der oben angegebenen Formel I sowie

b) mindestens einen der folgenden Farbstoffe:

α) einen orange, roten oder rotbraunen Farbstoff der Formel II

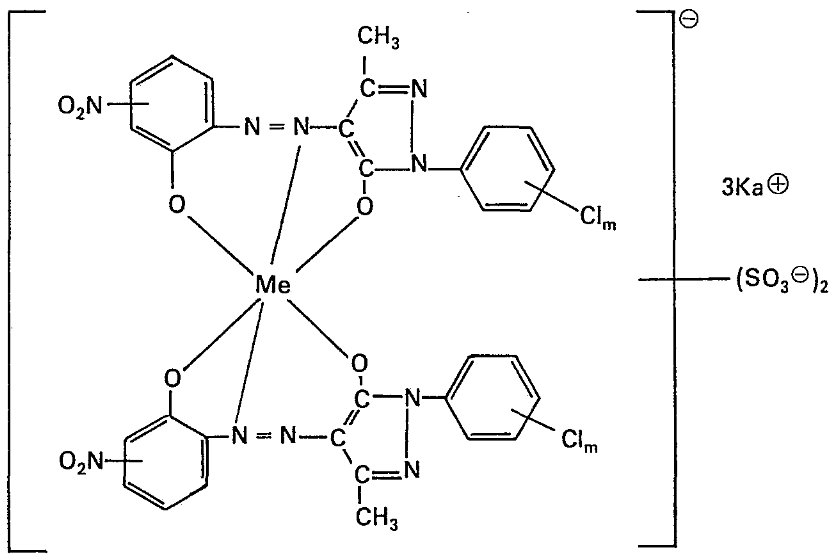

(II),

worin m eine ganze Zahl von 0–2, Me Kobalt oder Chrom und $Ka^{\oplus}$ ein Kation bedeutet,

β) einen blauen oder violetten Farbstoff der Formel III

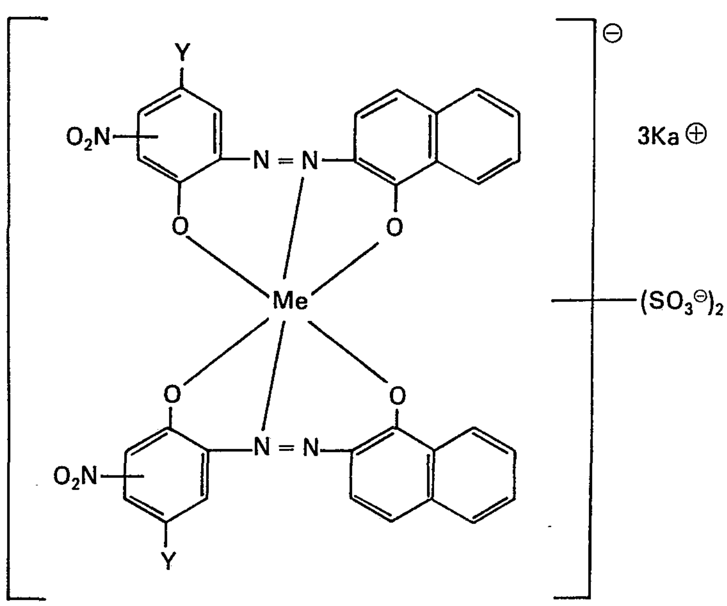

(III)

worin Y Wasserstoff, Chlor, Methyl oder Methoxy, Me Kobalt oder Chrom und Ka⊕ ein Kation bedeutet, oder der Formel IV

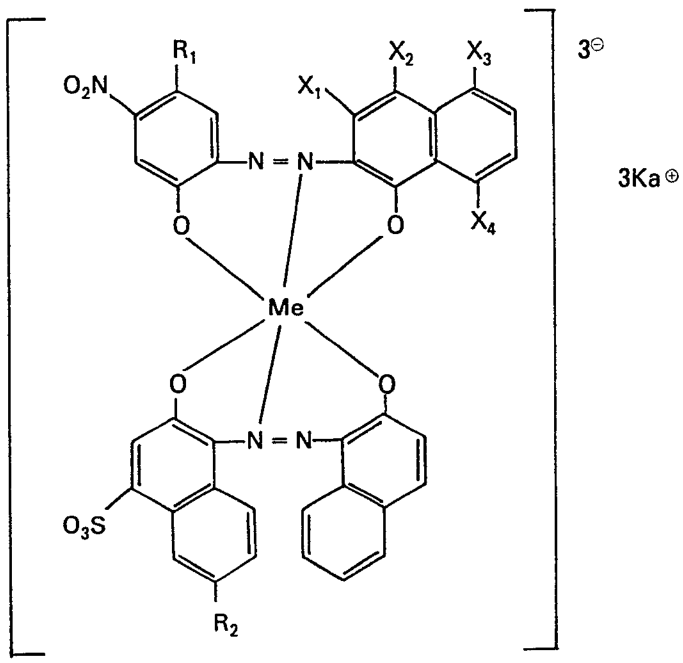

(IV),

worin
Me Kobalt oder Chrom,
$R_1$ Wasserstoff, Chlor, Methyl oder Methoxy,
$R_2$ Wasserstoff oder Chlor und
Ka⊕ ein Kation bedeutet und von den Substituenten

$X_1$, $X_2$ $X_3$ und $X_4$ einer eine $SO_3$-Gruppe und die drei anderen Wasserstoff darstellen,

γ) einen gelben oder gelbbraunen Farbstoff der Formel V

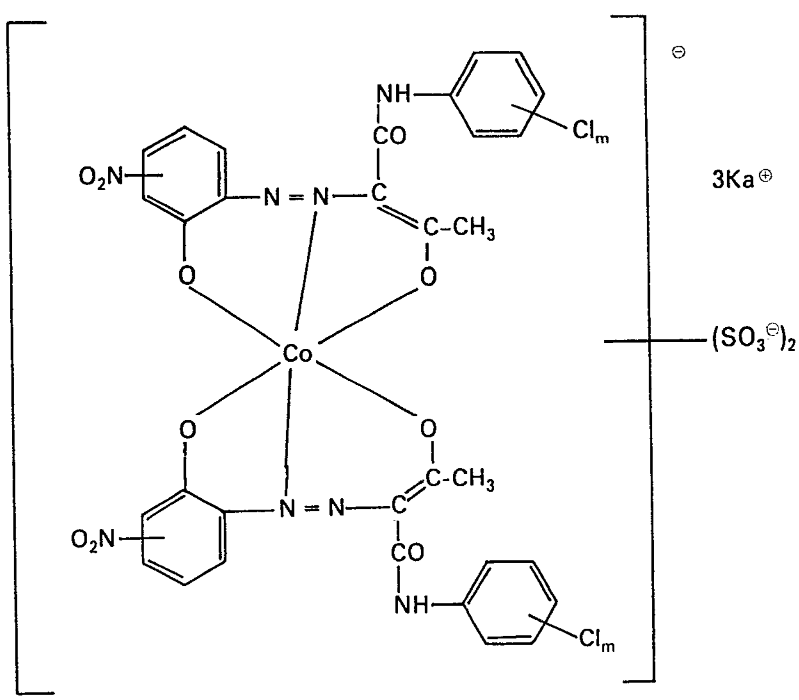

(V)

worin m eine ganze Zahl von 0 bis 2 und Ka⊕ ein Kation bedeutet, sowie

c) gegebenenfalls einen gelben Farbstoff der Formel VI

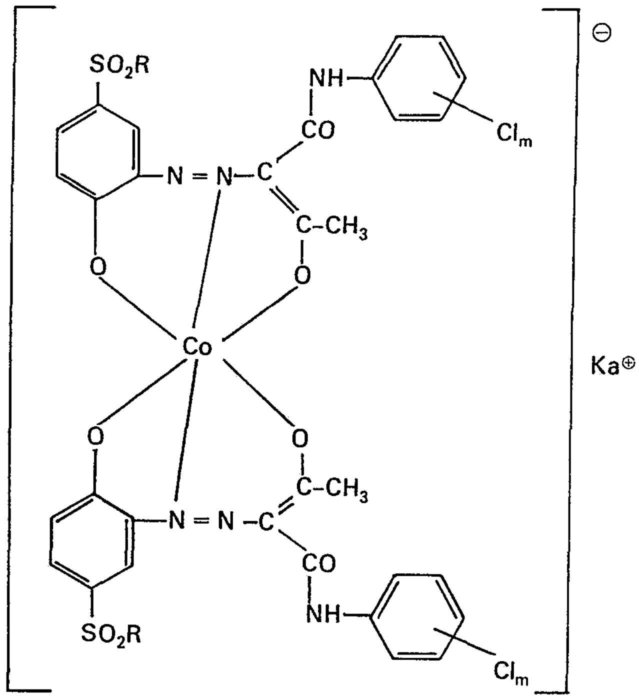

(VI)

worin R $C_1$-$C_4$-Alkyl, Amino, $C_1$-$C_4$-Alkylamino oder $C_1$-$C_4$-Dialkylamino, m 0 oder 1 und Ka⊕ ein Kation bedeutet.

Besonders bevorzugt ist die Verwendung einer Farbstoffmischung, enthaltend

a) einen braunen Farbstoff der Formel I,

b) einen gelben oder gelbbraunen Farbstoff der Formel V sowie

c) einen gelben Farbstoff der Formel VI.

Die nachfolgenden Beispiele dienen der Erläuterung der Erfindung, ohne sie darauf zu beschränken. Teile bedeuten Gewichtsteile und Prozente Gewichtsprozente. Die Temperaturen sind in Grad Celsius angegeben.

Beispiel 1

100 Teile Bekleidungsvelourleder werden bei 50° in einer Lösung von 1000 Teilen Wasser und 2 Teilen 24%igem Ammoniak während 2 Stunden aufgewalkt und anschliessend bei 60° in einer Lösung von 1000 Teilen Wasser, 2 Teilen 24%igem Ammoniak und 3 Teilen des Farbstoffes der Formel

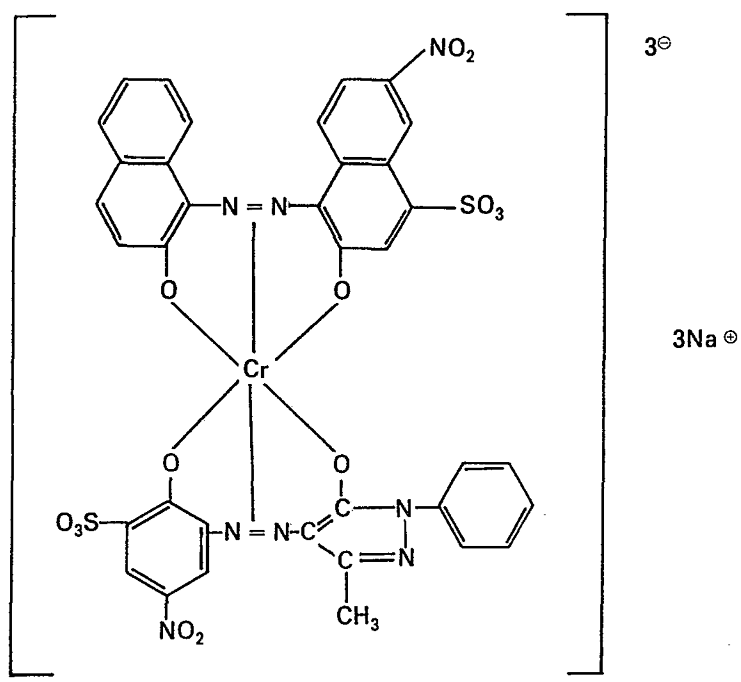

während 1 Stunde gefärbt. Hierauf gibt man eine Lösung von 40 Teilen Wasser und 4 Teilen 85%iger Ameisensäure zu und färbt noch weitere 30 Minuten. Dann wird das Leder gut gespült und gegebenenfalls noch mit 2 Teilen eines Dicyandiaminoformaldehyd-Kondensationsproduktes während 30 Minuten bei 50° behandelt. Man erhält eine braune Färbung mit vorzüglichen Echtheiten.

Der eingesetzte Farbstoff wurde folgendermassen hergestellt: In 1000 Teilen Wasser werden nacheinander die komplexe 1:1-Chromverbindung, welche 41,9 Teile des Farbstoffes aus diazotierter 4-Nitro-2-aminophenol-6-sulfonsäure und 1-Phenyl-3-methyl-5-pyrazolon sowie 5,2 Teile Chrom enthält, und 43,9 Teile des Monoazofarbstoffes aus 2-Naphthol-1-diazo-6-nitro-4-sulfonsäure und 2-Naphthol eingetragen und bei pH 5-9 auf 80° erwärmt, bis die Umsetzung zum 1:2 Komplex beendigt ist. Danach wird mit 200 Teilen Kochsalz der Farbstoff ausgefällt, filtriert und getrocknet.

Beispiel 2

Arbeitet man wie im Beispiel 1 beschrieben, verwendet jedoch den folgenden 1:2-Chromkomplexfarbstoff, so erhält man mit guten Echtheiten braun gefärbtes Leder.

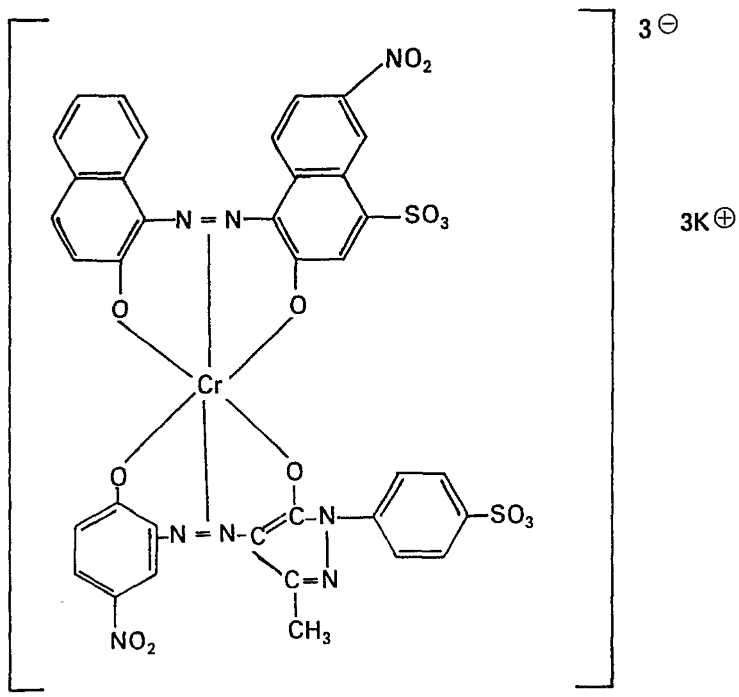

Der eingesetzte Farbstoff wurde folgendermassen hergestellt:

Der 1:1-Chromkomplex, der 41,9 Teile des Farbstoffes aus diazotiertem 4-Nitro-2-aminophenol und 1-(Phenyl-4′-sulfonsäure)-3-methyl-5-pyrazolon sowie 5,2 Teile Chrom enthält, wird in 950 Teile Wasser und 50 Teile Triethanolamin eingetragen und mit 43,9 Teilen des Monoazofarbstoffes aus 2-Naphthol-1-diazo-6-nitro-4-sulfonsäure und 2-Naphthol versetzt. Bei einem pH-Wert von 5-9 wird das Reaktionsgemisch auf 80° erwärmt, bis sich der 1:2-Komplex vollständig gebildet hat. Danach wird mit 200 Teilen Kaliumchlorid der Farbstoff ausgefällt, filtriert und getrocknet.

Beispiel 3

Arbeitet man wie im Beispiel 1, verwendet jedoch anstelle des dort eingesetzten Farbstoffes eine Farbstoffmischung, bestehend aus

0,55 Teilen des im Beispiel 1 angegebenen Farbstoffes,

0,33 Teilen des gelben 1:2-Kobaltkomplexes vom Monoazofarbstoff der Formel

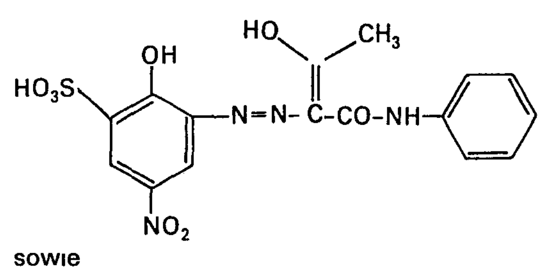

sowie

0,11 Teilen des blauen 1:2-Chromkomplexes vom Monoazofarbstoff der Formel

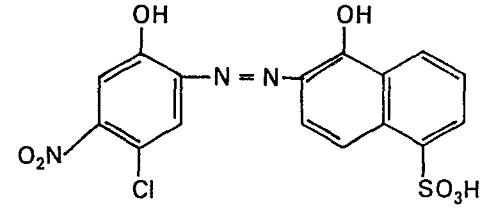

so erhält man mit guten Echtheiten olivstichig braun gefärbtes Leder.

Die Färbung zeichnet sich durch eine besonders hohe Farbstärke aus.

Beispiel 4

Arbeitet man wie im Beispiel 1, verwendet jedoch anstelle des dort eingesetzten Farbstoffes eine Farbstoffmischung, bestehend aus

0,60 Teilen des im Beispiel 1 angegebenen Farbstoffes,

0,10 Teilen des im Beispiel 3 angegebenen gelben Farbstoffes sowie

0,05 Teilen des roten 1:2-Chromkomplexes vom Farbstoff der Formel

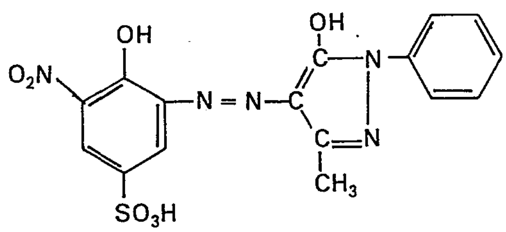

so erhält man mit guten Echtheiten rotstichig braun gefärbtes Leder. Die Färbung zeichnet sich durch eine besonders hohe Farbstärke aus.

Beispiel 5

Arbeitet man wie im Beispiel 1, verwendet jedoch anstelle des dort eingesetzten Farbstoffes eine Farbstoffmischung, bestehend aus

0,40 Teilen des im Beispiel 1 angegebenen Farbstoffes,

0,10 Teilen des im Beispiel 3 verwendeten gelben 1:2-Kobaltkomplexes, sowie

0,15 Teilen des gelben Farbstoffes der Formel

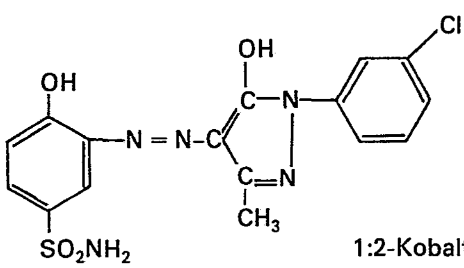

(VII)

1:2-Kobaltkomplex

so erhält man ein mit guten Echtheiten gelbstichig braun gefärbtes Leder. Die Färbung zeichnet sich durch eine besonders hohe Farbstärke aus.

Beispiel 6

Arbeitet man wie im Beispiel 5, verwendet jedoch anstelle des dort eingesetzten gelben Farbstoffes der Formel (VII) den gelben Farbstoff der Formel

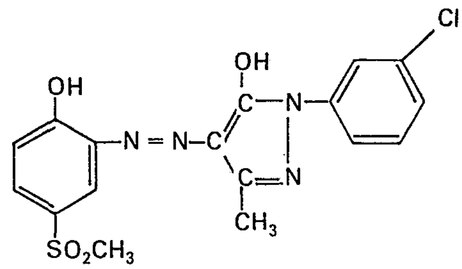

1:2-Kobaltkomplex

so erhält man ein mit guten Echtheiten gelbstichig braun gefärbtes Leder. Die Färbung zeichnet sich durch eine besonders hohe Farbstärke aus.

Beispiel 7

Arbeitet man wie im Beispiel 1, verwendet jedoch anstelle des dort eingesetzten Farbstoffes eine Farbstoffmischung, bestehend aus 0,4 Teilen des im Beispiel 1 verwendeten Farbstoffes und 0,1 Teilen des im Beispiel 3 verwendeten gelben 1:2-Kobaltkomplexes, so erhält man mit guten Echtheiten gelbbraun gefärbtes Leder. Die Färbung zeichnet sich durch eine besonders hohe Farbstärke aus.

**Patentansprüche**

1. Verwendung von 1:2-Chromkomplexfarbstoffen der Formel I

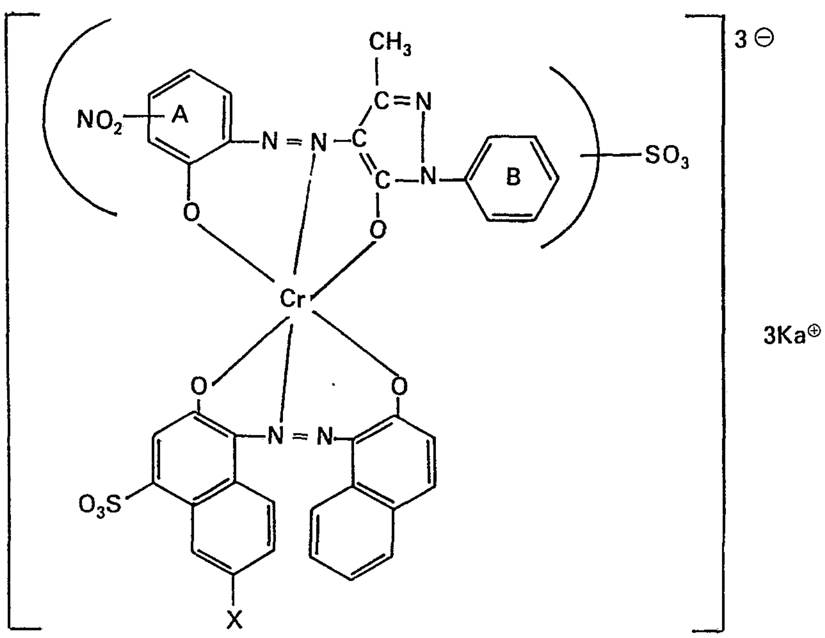

(I),

worin X Chlor oder Nitrol und Ka⊕ ein Kation bedeutet und worin die Sulfogruppe im Pyrazolonfarbstoff im Ring A oder B und die Nitrogruppe im Ring A dieses Farbstoffs in 4-, 5- oder 6-Stellung des 1-Hydroxy-2-amino-benzols angeordnet ist, mit der Massgabe, dass sich die Nitrogruppe nicht in 4-Stellung im Ring A befindet, wenn die Sulfogruppe metaständig zum Pyrazolonrest im Ring B angeordnet ist, zum Färben von Leder oder Pelzen.

2. Verwendung gemäss Anspruch 1 von Farbstoffen der Formel I, worin die Nitrogruppe im Ring A in 4- oder 6-Stellung, insbesondere in 4-Stellung angeordnet ist.

3. Verwendung gemäss Anspruch 1 oder 2 von Farbstoffen der Formel I, worin die Sulfogruppe im Pyrazolonfarbstoff im Ring A, insbesondere in 6-Stellung angeordnet ist.

4. Verwendung gemäss einem der Ansprüche 1–3 von Farbstoffen der Formel I, worin X Nitro bedeutet.

5. Verwendung gemäss Anspruch 1 von Farbstoffen der Formel I, worin X Nitro bedeutet und die Nitrogruppe im Ring A in 4-Stellung sowie die Sulfogruppe in diesem Ring in 6-Stellung angeordnet ist.

6. Verwendung von Farbstoffen der Formel I zum Färben von Leder.

7. Verwendung einer Farbstoffmischung, enthaltend

a) einen braunen 1:2-Chromkomplexfarbstoff der in Anspruch 1 angegebenen Formel I sowie

b) mindestens einen der folgenden Farbstoffe:

α) einen orange, roten oder rotbraunen Farbstoff der Formel II

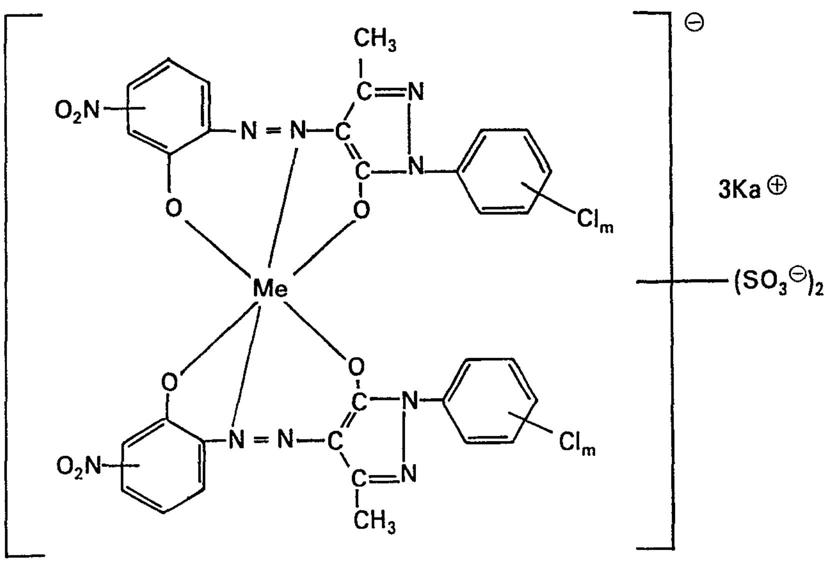

(II),

worin m eine ganze Zahl von 0–2, Me Kobalt oder Chrom und Ka⊕ ein Kation bedeutet,

β) einen blauen oder violetten Farbstoff der Formel III

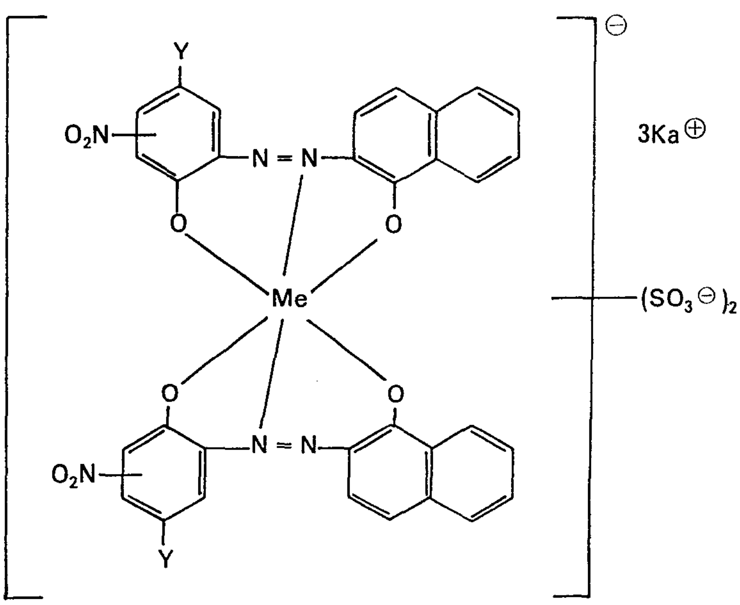

(III)

worin Y Wasserstoff, Chlor, Methyl oder Methoxy, Me Kobalt oder Chrom und Ka⊕ ein Kation bedeutet, oder der Formel IV

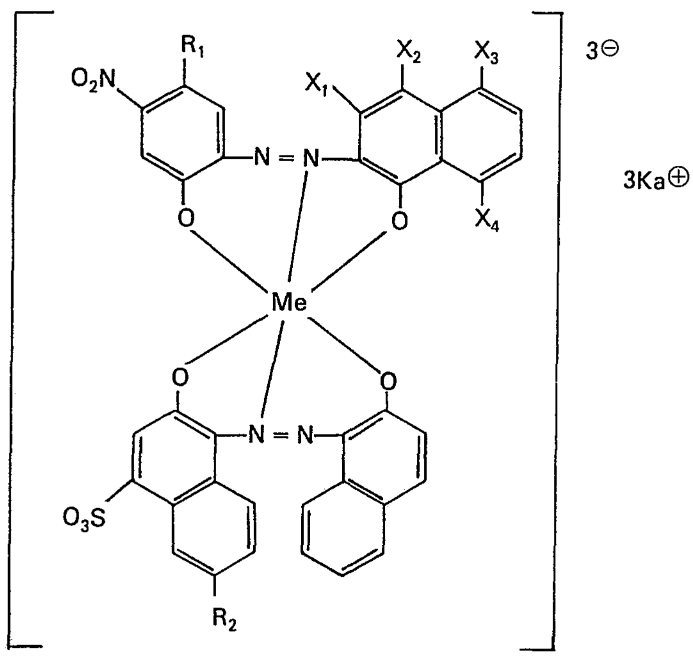

(IV),

worin
Me Kobalt oder Chrom,
$R_1$ Wasserstoff, Chlor, Methyl oder Methoxy,
$R_2$ Wasserstoff oder Chlor und
Ka⊕ ein Kation bedeutet und von den Substituenten

$X_1$, $X_2$, $X_3$ und $X_4$ einer eine $SO_3$-Gruppe und die drei anderen Wasserstoff darstellen,

γ) einen gelben oder gelbbraunen Farbstoff der Formel V

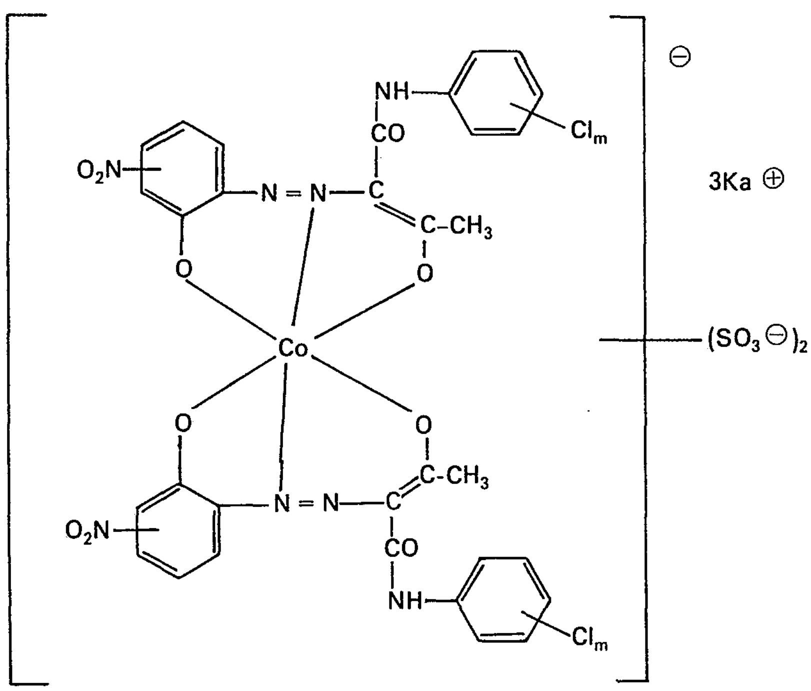

(V)

worin m eine ganze Zahl von 0 bis 2 und Ka⊕ ein Kation bedeutet, sowie

c) gegebenenfalls einen gelben Farbstoff der Formel VI

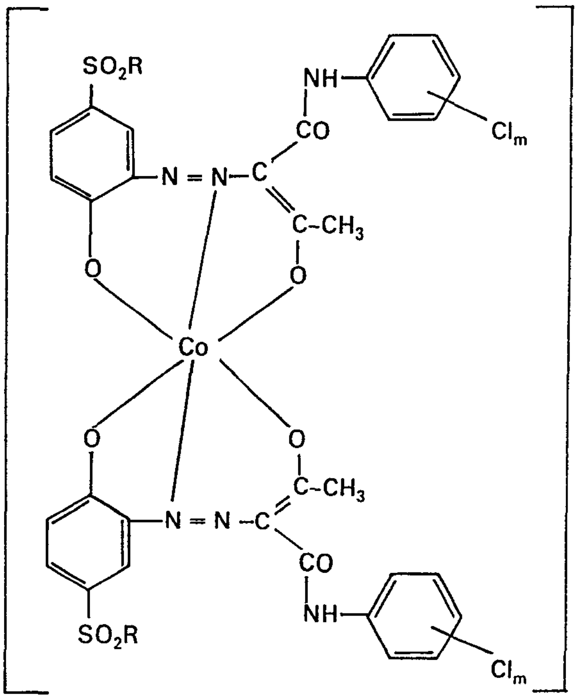

⊖

Ka ⊕

(VI)

worin R $C_1$-$C_4$-Alkyl, Amino, $C_1$-$C_4$-Alkylamino oder $C_1$-$C_4$-Dialkylamino, m 0 oder 1 und Ka⊕ ein Kation bedeutet, zum Färben von Leder oder Pelzen.

8. Verwendung einer Farbstoffmischung, enthaltend

a) einen braunen 1:2-Chromkomplexfarbstoff der in Anspruch 1 angegebenen Formel I,

b) einen gelben oder gelbbraunen Farbstoff der in Anspruch 7 angegebenen Formel V sowie

c) einen gelben Farbstoff der in Anspruch 7 angegebenen Formel VI zum Färben von Leder oder Pelzen.

**Claims**

1. The use of 1:2 chrome complex dyes of the formula I

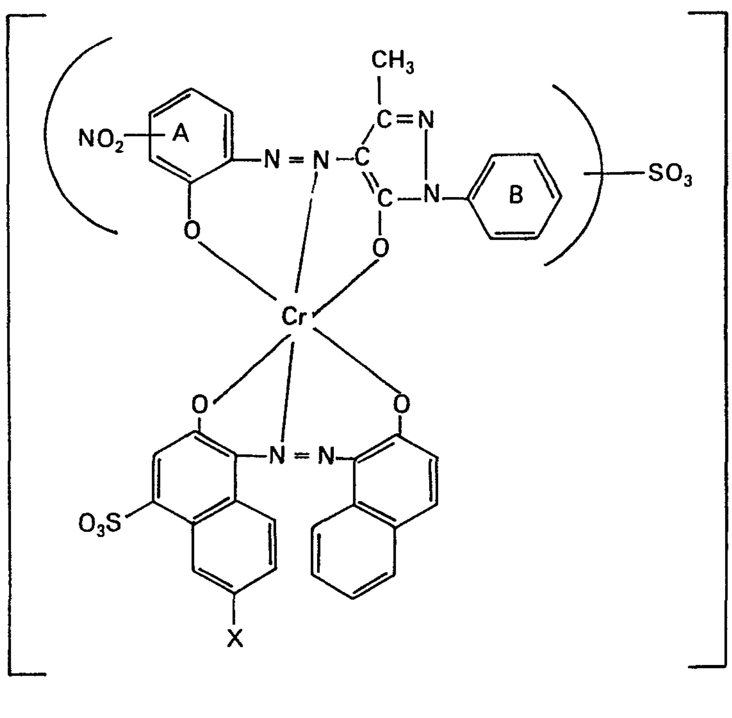

3 ⊖

3Ka ⊕

(I),

wherein X is chlorine or nitro and Ka⊕ is a cation and wherein the sulfo group in the pyrazolone dye is in the ring A or B, and the nitro group is in the ring A of this dye in the 4-, 5- or 6-position of the 1-hydroxy-2-aminobenzene, with the proviso that the nitro group is not in the 4-position in the

ring A if the sulfo group is in the meta-position to the pyrazolone radical in the ring B, for dyeing leather or furs.

2. The use according to claim 1 of dyes of the formula I wherein the nitro group in the ring A is in the 4- or 6-position, particularly in the 4-position.

3. The use according to either of claims 1 or 2 of dyes of the formula I wherein the sulfo group in the pyrazolone dye is in the ring A, especially in the 6-position.

4. The use according to any one of claims 1 to 3 of dyes of the formula I wherein X is nitro.

5. The use according to claim 1 of dyes of the formula I wherein X is nitro, and the nitro group in the ring A is in the 4-position, and the sulfo group in this ring is in the 6-position.

6. The use of dyes of the formula I for dyeing leather.

7. The use of a dye mixture containing:

a) a brown 1:2 chrome complex dye of the formula I as indicated in claim 1; as well as

b) at least one of the following dyes:

α) an orange, red or reddish brown dye of the formula II

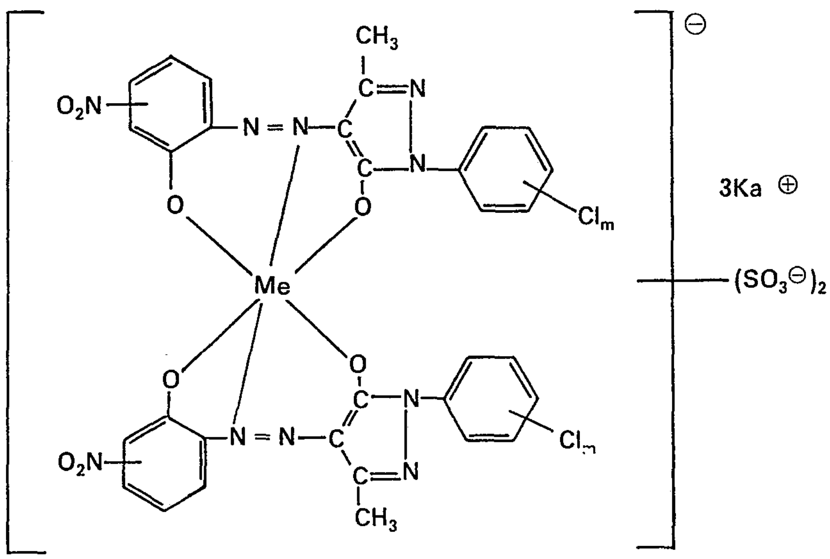

(II),

wherein m is an integer from 0 to 2, Me is cobalt or chromium, and Ka⊕ is a cation,

β) a blue or violet dye of the formula III

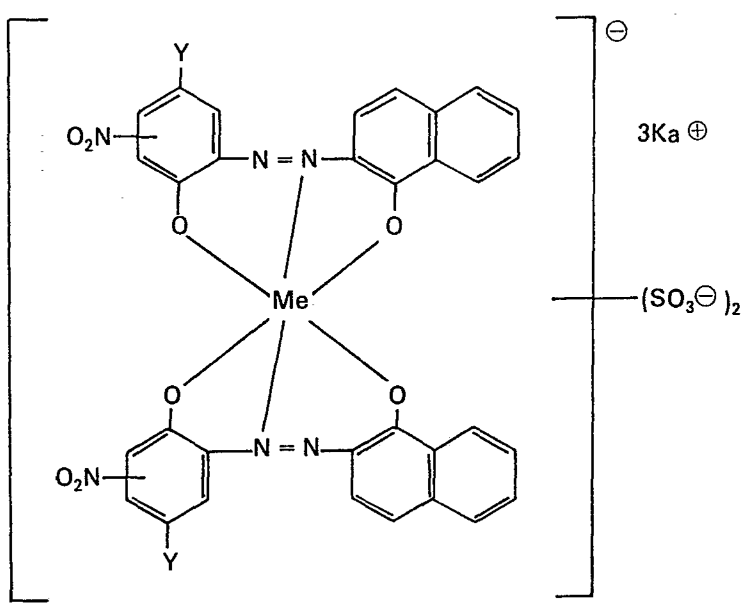

(III)

wherein Y is hydrogen, chlorine, methyl or methoxy, Me is cobalt or chormium, and Ka⊕ is a cation, or of the formula IV

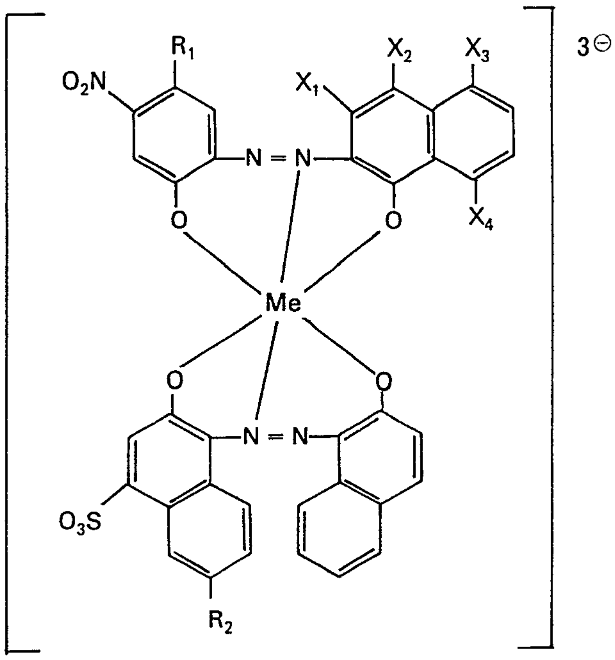

$3Ka^{\oplus}$

(IV),

wherein
Me is cobalt or chromium,
$R_1$ is hydrogen, chlorine, methyl or methoxy,
$R_2$ is hydrogen or chlorine, and
$Ka^{\oplus}$ is a cation, and one of the substituents $X_1$, $X_2$, $X_3$ and $X_4$ is an $SO_3$ group, and the other three are hydrogen, or

γ) a yellow or yellowish brown dye of the formula V

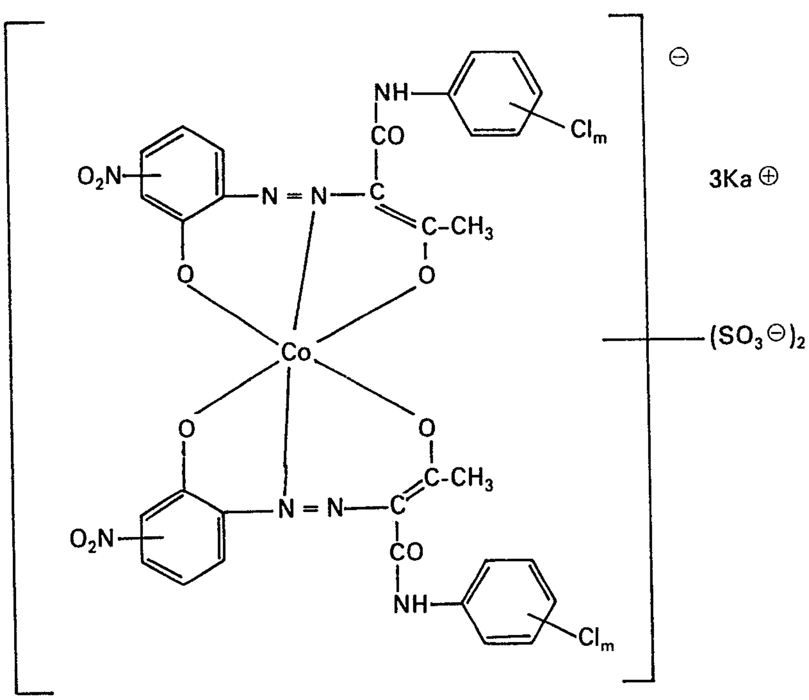

$3Ka^{\oplus}$

(V)

wherein m is an integer from 0 to 2, and $Ka^{\oplus}$ is a cation; and

c) optionally a yellow dye of the formula VI

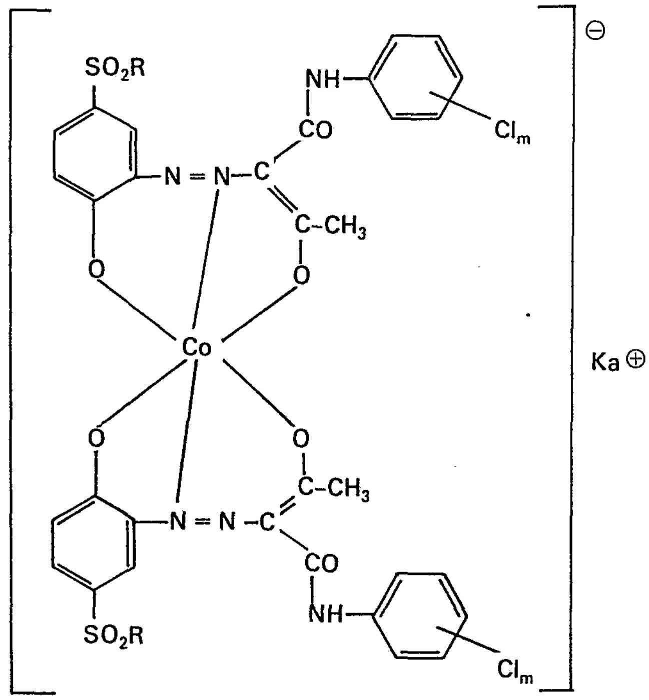

(VI)

wherein R is $C_1$-$C_4$-alkyl, amino, $C_1$-$C_4$-alkylamino or $C_1$-$C_4$-dialkylamino, m is 0 or 1 and Ka⊕ is a cation, for dyeing leather or furs.

8. The use of a dye mixture containing:

a) a brown 1:2-chrome complex dye of the formula I as indicated in claim 1,

b) a yellow or yellowish brown dye of the formula V as indicated in claim 7, and

c) a yellow dye of the formula VI as indicated in claim 7.

## Revendications

1. Utilisation de colorants à complexe de chrome 1:2 de formule I

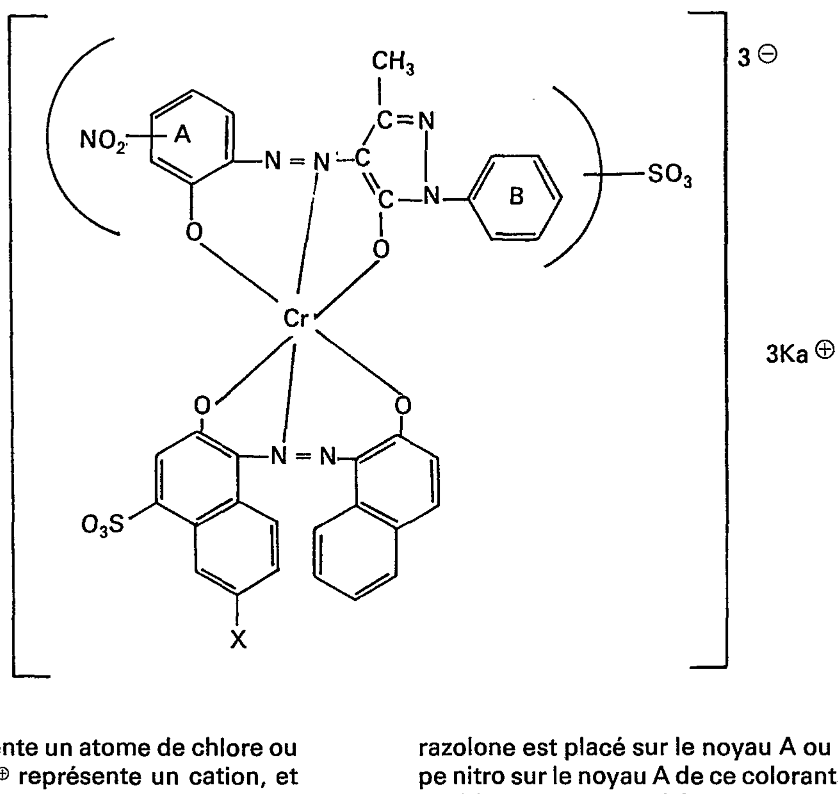

(I),

dans laquelle X représente un atome de chlore ou un groupe nitro, et Ka⊕ représente un cation, et dans laquelle le groupe sulfo dans le colorant pyrazolone est placé sur le noyau A ou B et le groupe nitro sur le noyau A de ce colorant se trouve en position 4, 5 ou 6 du 1-hydroxy-2-aminobenzène,

à la condition que le groupe nitro ne se trouve pas en position 4 sur le noyau A lorsque le groupe sulfo est placé sur le noyau B en position méta par rapport au reste pyrazolone, pour la teinture de cuirs ou de peaux.

2. Utilisation selon la revendication 1, de colorants de formule I, dans lesquels le groupe nitro se trouve en position 4 ou 6, en particulier en position 4 sur le noyau A.

3. Utilisation selon la revendication 1 ou 2, de colorants de formule I, dans lesquels le groupe sulfo est placé dans le colorant pyrazolone sur le noyau A, en particulier en position 6.

4. Utilisation selon l'une des revendications 1 à 3, de colorants de formule I, dans lesquels X représente un groupe nitro.

5. Utilisation selon la revendication 1, de colorants de formule I, dans lesquels X représente un groupe nitro et le groupe nitro sur le noyau A se trouve en position 4, de même que le groupe sulfo est placé en position 6 sur ce noyau.

6. Utilisation de colorants de formule I pour la teinture du cuir.

7. Utilisation d'un mélange tinctorial contenant

a) un colorant marron à complexe de chrome 1:2, de formule I indiquée dans la revendication 1, ainsi que

b) au moins un des colorants suivants:

α) un colorant orangé, rouge ou marron-rouge, de formule II

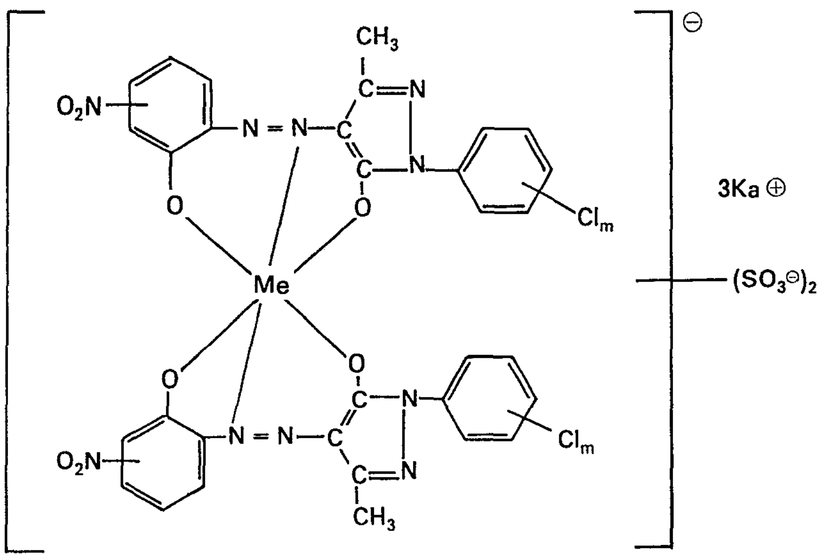

(II),

dans laquelle m représente un nombre entier allant de 0 à 2, Me représente le cobalt ou le chrome, et Ka⊕ représente un cation,

β) un colorant bleu ou violet de formule III

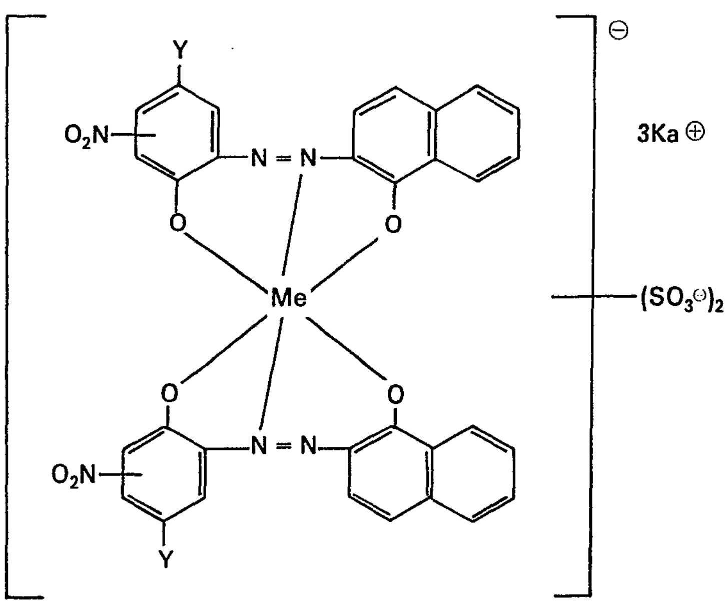

(III)

dans laquelle Y représente un atome d'hydrogène ou de chlore, ou un groupe méthyle ou méthoxy, Me représente le cobalt ou le chrome et Ka⊕ représente un cation, ou de formule IV

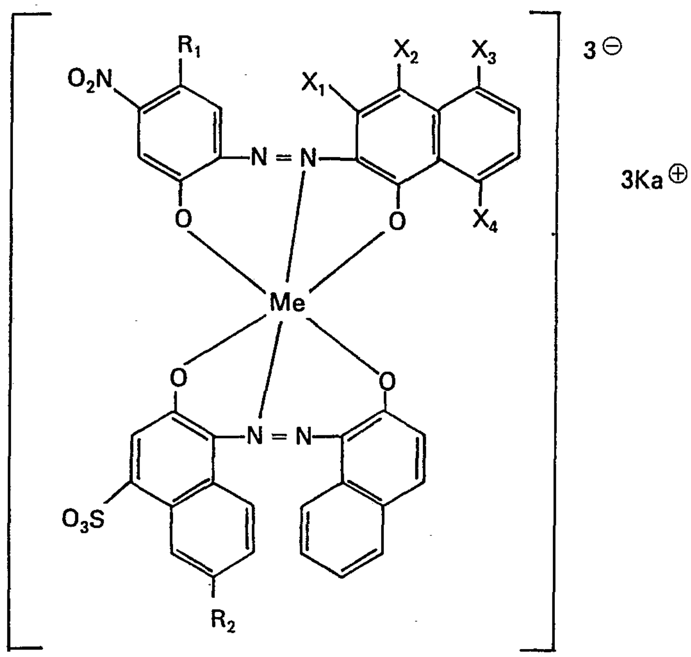

(IV),

dans laquelle

Me représente le cobalt ou le chrome,

$R_1$ représente un atome d'hydrogène ou de chlore, ou un groupe méthyle ou méthoxy,

$R_2$ représente un atome d'hydrogène ou de chlore, et

Ka⊕ représente un cation,

et l'un des substituants $X_1$, $X_2$, $X_3$ et $X_4$ représente un groupe $SO_3$, et les trois autres représentent des atomes d'hydrogène,

γ) un colorant jaune ou marron-jaune de formule V

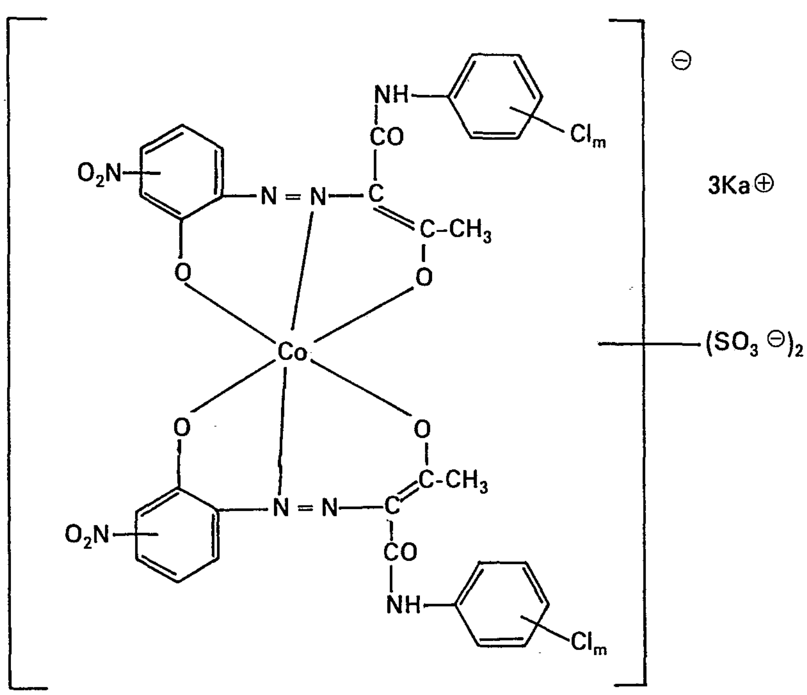

(V)

dans laquelle m représente un nombre entier allant de 0 à 2 et Ka⊕ représente un cation, ainsi que

c) éventuellement un colorant jaune de formule VI

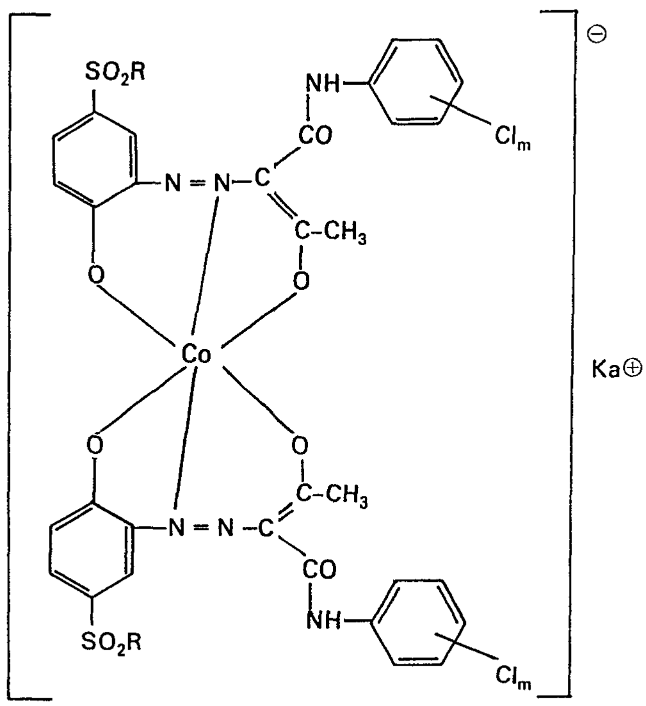

Ka⊕

(VI)

dans laquelle R représente un groupe alkyle en $C_1$-$C_4$, amino, alkyl($C_1$-$C_4$)-amino oudialkyl($C_1$-$C_4$)-amino, m est 0 ou 1, et Ka⊕ représente un cation, pour la teinture de cuirs ou de peaux.

8. Utilisation d'un mélange tinctorial contenant

a) un colorant marron à complexe de chrome 1:2, de formule I indiquée dans la revendication 1,

b) un colorant jaune ou marron-jaune de formule V indiquée dans la revendication 7, ainsi que

c) un colorant jaune de formule VI indiquée dans la revendication 7, pour la teinture de cuirs ou de peaux.